# EUROPÄISCHE PATENTANMELDUNG

(11) **EP 2 065 791 A1**
(43) Veröffentlichungstag der Anmeldung: **03.06.2009**
(21) Anmeldenummer: 08020497.7
(22) Anmeldetag: 26.11.2008
(51) Int. Cl.: G06F 3/041, G06F 3/033

(54) **Eingabedisplay**

(30) Priorität: 29.11.2007 DE 202007016806 U
(71) Anmelder: Fröbel, Eckhard, 93047 Regensburg (DE)
(72) Erfinder: Fröbel, Eckhard, 93047 Regensburg (DE)
(74) Vertreter: Graf, Helmut

(57) **Zusammenfassung**

Eingabedisplay mit einem eine Berührungsfläche bildenden Element und mit einer Sensoranordnung, welche ein von der Lage des jeweiligen Berührungspunktes an der Berührungsfläche abhängiges Signal liefert.

## Beschreibung

Die Erfindung bezieht sich auf ein Eingabedisplay gemäß Oberbegriff Patentanspruch 1.

Bekannt sind beispielsweise als sogenannte Touch-Screens ausgebildete Eingabedisplays, die es ermöglichen, unterschiedliche Funktionen z.B. eines Rechners durch Berühren eines Berührungsfeldes oder einer Berührungsfläche an unterschiedlichen Bereichen einzuleiten, insbesondere auch unterstützt durch eine optische Darstellung beispielsweise durch eine Darstellung von Symbolen auf einem bildgebenden, z.B. hinter dem Eingabe- oder Berührungsfeld angeordneten und durch das Berührungsfeld hindurch sichtbaren Einrichtung. Diese bekannten, durch Berührung betätigbaren Eingabedisplays oder Touch-Screens sind konstruktiv relativ aufwendig.

Aufgabe der Erfindung ist es, ein Eingabedisplay aufzuzeigen, welches einen wesentlich vereinfachten Aufbau aufweist. Zur Lösung dieser Aufgabe ist ein Eingabedisplay entsprechend dem Patentanspruch 1 ausgebildet.

Ein Eingabedisplay im Sinne der Erfindung ist allgemein eine ein Berührungsfeld oder eine Berührungsfläche aufweisende Einrichtung, mit der durch Berühren unterschiedlicher Bereiche des Berührungsfeldes unterschiedliche Funktionen einleitbar oder veranlassbar sind.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: ein Eingabedisplay z.B. in Form eines Touch-Screens in schematischer Darstellung und in Draufsicht;
- Fig. 2: in vereinfachter Darstellung eine Seitenansicht des Eingabedisplays der Figur 1;
- Fig. 3: in vereinfachter Darstellung eine weitere Ausführungsform des erfindungsgemäßen Eingabedisplays.

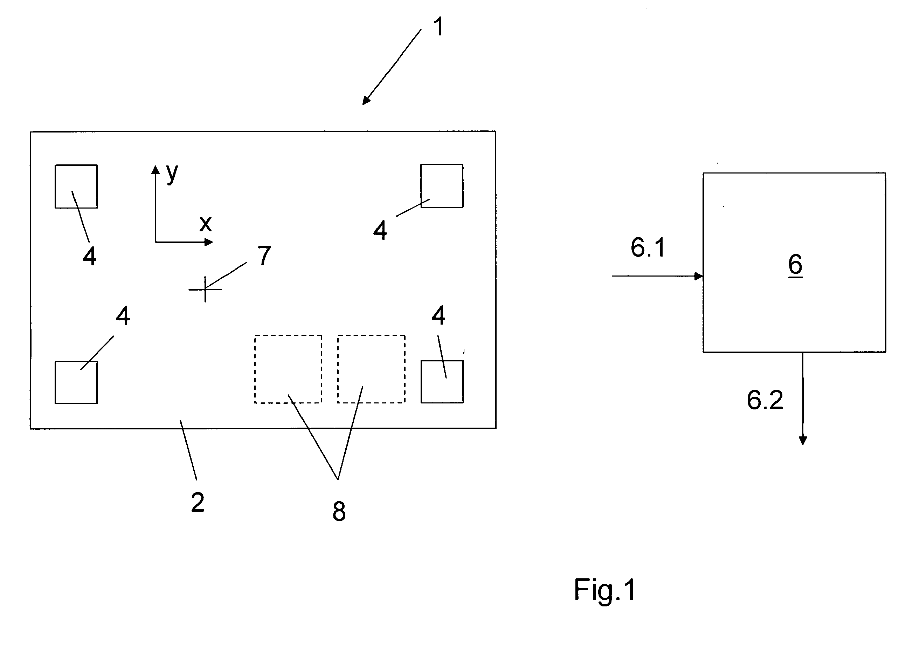

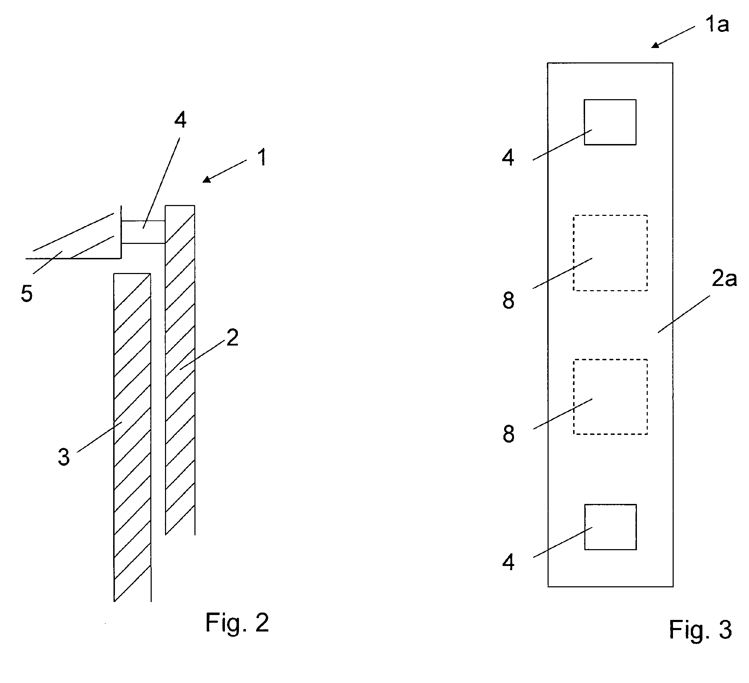

Das in den Figuren 1 und 2 allgemein mit 1 bezeichnete Eingabedisplay besteht im Wesentlichen aus einer Platte 2 aus einem durchscheinenden bzw. transparenten Material, beispielsweise aus Glas oder einem glasartigen Kunststoff. Die Platte 2 ist bei der dargestellten Ausführungsform rechteckförmig ausgebildet und vor einem Bildschirm oder Display 3, beispielsweise einem LCD-Display eines Rechners angeordnet, und zwar von dem Display 3 geringfügig derart beabstandet, dass keine Berührung zwischen dem Display 3 und der Platte 2 besteht. Im Bereich der vier Ecken der Platte 2 ist diese über vier Drucksensoren 4 an einem Gegenlager 5 abgestützt, welches beispielsweise von einem das Display 3 umgebenden Rahmen gebildet ist. Die Drucksensoren 4 sind elektromechanische Drucksensoren, die den jeweils zwischen der Platte 2 und dem Widerlager 5 wirkenden Druck in ein diesem Druck proportionales elektrisches Messsignal umsetzen. Als Drucksensoren eignen sich beispielsweise Piezzo-Drucksensoren, Dehnungsmessstreifen oder andere Drucksensoren mit einem Sensorelement, dessen elektrische Werte sich in Abhängigkeit von der Größe der einwirkenden äußeren Kraft oder eine durch diese bedingte Verformung ändern.

Die Drucksensoren 4 sind jeweils mit Eingängen 6.1 einer Auswerteinrichtung, beispielsweise mit einer Mikroprozessor gestützten Auswerteinrichtung 6 verbunden, die an ihrem Ausgang 6.2 ein von den Messsignalen der Drucksensoren 4 bzw. von dem Muster der Messsignale abhängiges Ausgangssignal liefert.

Wird das Eingabedisplay 1 bzw. die Platte 2 an der dem Widerlager 5 abgewandten Außenseite beispielsweise mit dem Finger eines Benutzers oder mit einem Hilfsmittel (z.B. Stab oder Griffel) an einem bestimmten Bereich, z.B. an dem in der Figur 1 mit 7 bezeichneten Berührungspunkt berührt und hierbei ein gewisser Druck auf die Platte 2 ausgeübt, so liefern die einzelnen Drucksensoren 4 Messsignale, deren Größe eine Funktion des Abstandes des jeweiligen Drucksensors 4 zum Berührungspunkt 7 ist, d.h. jedes von einem Drucksensor 4 gelieferte Messsignal ist u.a. proportional zu dem auf die Scheibe 2 ausgeübten Druck sowie umgekehrt proportional zum Abstand zwischen dem jeweiligen Drucksensor 4 und dem Berührungspunkt 7. Beim Berühren der Platte 2 wird somit ein der Lage des jeweiligen Berührungspunktes 7 genau entsprechendes Muster von Messsignalen erzeugt.

Da die Lage der Drucksensoren 4 in einem die Berührungsfläche einschließenden X- und Y-Koordinatensystem bekannt ist, kann die Auswertelektronik 6 aus den von den Drucksensoren 4 gelieferten Messsignalen bzw. dem Muster der Unterschiede der Messsignale die Lage oder X- und Y-Koordinaten des jeweiligen Berührungspunktes 7 ermitteln und beispielsweise am Ausgang 6.2 als Ausgangssignal zur Verfügung stellen, um z.B. bei der Ausbildung des Eingabedisplays 1 als Touch-Screen durch Berühren der Scheibe 2 an unterschiedlichen Berührungspunkten 7 unterschiedliche Funktionen, Programme, Programmroutinen usw. einzuleiten.

Grundsätzlich besteht auch die Möglichkeit, das Eingabedisplay 1 als reines Bedienungsfeld ohne das Display 3 auszubilden. In diesem Fall besteht die Platte 2 beispielsweise aus einem nicht durchsichtigen Material, z.B. aus Metall oder Stahl und ist an ihrer den Drucksensoren 4 abgewandten Außenseite mit Tastfeldern versehen, wie dies in der Figur 1 mit unterbrochenen Linien bei 8 angedeutet ist. Jedem Tastfeld 8 ist eine bestimmte X- und Y-Koordinate zugeordnet, der ein genau definiertes Muster der von den Drucksensoren 4 gelieferten Messsignale entspricht. Die Tastfelder 8 sind z.B. optisch aufgebracht, beispielsweise durch Aufdrucken, gravieren usw.

In der Auswertelektronik 6 sind dann beispielsweise tabellarisch die den Tastfeldern 8 zugeordneten Muster der von den Drucksensoren 4 gelieferten Messsignale abgelegt, sodass beim Berühren eines Tastfeldes 8 dieses auch exakt definiert und ein dem berührten Tastfeld entsprechendes Signal am Ausgang 6.2 veranlasst werden kann.

Die Figur 2 zeigt als weitere Ausführungsform ein Eingabedisplay 1a welches wiederum an seiner Berührungsfläche mit mehreren Tastenfeldern 8 ausgebildet ist, die bei dieser Ausführung in einer Reihe aufeinander folgend an der Außenfläche einer schmalen streifenförmigen Platte 2a optisch aufgebracht sind, beispielsweise durch Aufdrucken, gravieren usw. An den beiden Enden der Platte 2a ist jeweils wenigstens ein Drucksensor 4 vorgesehen. Beide Drucksensoren sind mit dem Eingang einer Auswertelektronik verbunden. Beim Drücken auf die Tastenfelder 8 erzeugen die Drucksensoren 4 Messsignale deren Größe wiederum u.a. umgekehrt proportional zum Abstand des Drucksensors von dem berührten Tastenfeld 8 ist. Jedem Tastenfeld 8 ist somit ein bestimmtes Muster der von den Drucksensoren 4 erzeugten Messsignale zugeordnet. Aus diesem Muster kann das jeweils gedrückte Tastenfeld 8 bestimmt bzw. identifiziert und ein entsprechendes Ausgangssignal veranlasst werden.

Das Eingabedisplay 1 oder 1a eignet sich insbesondere auch als gegen Vandalismus geschützte Eingabevorrichtung bei öffentlich zugänglichen Anlagen, Geräten usw., beispielsweise bei öffentlichen Telefonanlagen, öffentlichen zugänglichen Automaten, auch Bankautomaten, elektrischen Schließsystemen usw.

Die Erfindung wurde voranstehend an Ausführungsbeispielen beschrieben. Es versteht sich, dass Änderungen sowie Abwandlungen möglich sind, ohne dass dadurch der der Erfindung zugrunde liegende Erfindungsgedanke verlassen wird.

So wurde vorstehend bei der Ausbildung des Eingabedisplays 1 als Touch-Screen davon ausgegangen, dass hinter der Platte 2 ein bildgebendes Element, z.B. ein Bildschirm 3 bzw. ein entsprechendes LCD-Display oder ein anderes bildgebendes Display vorgesehen ist. Grundsätzlich ist es auch möglich, den Bildschirm 3 oder ein entsprechendes bildgebendes Display oder Element über die Drucksensoren 4 an dem Widerlager 5 zu halten, sodass dann die Platte 2 entfällt und das bildgebende Element die Berührungsfläche bildet.

### Bezugszeichenliste

- 1, 1a: Eingabedisplay
- 2, 2a: Platte
- 3: Bildschirm
- 4: Drucksensor
- 5: Widerlager
- 6: Auswertelektronik
- 6.1: Eingang
- 6.2: Ausgang
- 7: Berührungspunkt
- 8: Tastfeld

## Patentansprüche

1. Eingabedisplay mit einem eine Berührungsfläche bildenden Element (2, 2a) und mit einer Sensoranordnung (4), welche ein von der Lage des jeweiligen Berührungspunktes an der Berührungsfläche abhängiges Signal liefert,
**dadurch gekennzeichnet, dass** das die Berührungsfläche bildende Element (2, 2a) über wenigstens zwei von einander beabstandete Drucksensoren (4) an einem Widerlager (5) gehalten ist, und dass die von den Drucksensoren (4) gelieferten Einzelsignale das die Lage des Berührungspunktes definierende Signal bilden.

2. Eingabedisplay nach Anspruch 1, **dadurch gekennzeichnet, dass** das die Berührungsfläche bildende Element eine Platte (2, 2a), beispielsweise eine rechteckförmige oder quadratische oder streifenförmige Platte ist.

3. Eingabedisplay nach Anspruch 1 oder 2, **dadurch gekennzeichnet, dass** sich das die Berührungsfläche bildende Element (2, 2a) an seiner der Berührungsfläche abgewandten Seite über die Drucksensoren (4) an dem Widerlager (5) abstützt.

4. Eingabedisplay nach einem der vorhergehenden Ansprüche, **dadurch gekennzeichnet, dass** wenigstens drei, beispielsweise wenigstens vier Drucksensoren (4) gegeneinander räumlich versetzt vorgesehen sind.

5. Eingabedisplay nach einem der vorhergehenden Ansprüche, **dadurch gekennzeichnet, dass** das die Berührungsfläche bildende Element (2, 2a) aus einem lichtdurchlässigen oder durchscheinenden Material, beispielsweise aus Glas oder transparentem Kunststoff besteht.

6. Eingabedisplay nach Anspruch 5, **dadurch gekennzeichnet, dass** an einer der Berührungsfläche abgewandten Rückseite ein bildgebende Element (3) vorgesehen ist.

7. Eingabedisplay nach einem der vorhergehenden Ansprüche, **dadurch gekennzeichnet, dass** das die Berührungsfläche bildende Element ein bildgebendes Element ist, das sich über wenigstens zwei räumlich voneinander beabstandete Drucksensoren (4) an einem Widerlager (5) abstützt.

8. Eingabedisplay nach einem der vorhergehenden Ansprüche, **dadurch gekennzeichnet, dass** das die Berührungsfläche aufweisende Element (2, 2a) aus einem nicht transparenten Material, beispielsweise aus Kunststoff oder Metall, beispielsweise Stahl besteht.

9. Eingabedisplay nach einem der vorhergehenden Ansprüche, **dadurch gekennzeichnet, dass** die Berührungsfläche mit optisch angezeigten und/oder begrenzten Tastenfeldern (8) versehen ist.
